# EUROPÄISCHE PATENTANMELDUNG

(11) **EP 3 945 139 A1**
(43) Veröffentlichungstag der Anmeldung: **02.02.2022**
(21) Anmeldenummer: 20188188.5
(22) Anmeldetag: 28.07.2020
(51) Int. Cl.: C21B 7/24, F27D 21/00

(54) **VERFAHREN UND VORRICHTUNG ZUR VERSCHLEISSERKENNUNG BEI INDUSTRIEANLAGEN**

(71) Anmelder: Primetals Technologies Austria GmbH, 4031 Linz (AT)
(72) Erfinder: Hartl, Franz, 4720 Kallham (AT); Rohrhofer, Andreas, 4070 Eferding (AT); Fischer, Paul, 4040 Linz (AT); Mayrhofer, Anna, 4722 Peuerbach (AT); Voglmayr, Bernhard, 4060 Leonding (AT)
(74) Vertreter: Metals@Linz

(57) **Zusammenfassung**

Die vorliegende Erfindung betrifft das Gebiet von Industrieanlagen, konkret solche Industrieanalgen welche Verschleißelemente aufweisen, welche in gewissen Zeitabständen gewechselt werden müssen.

Die Aufgabe der Erfindung ist es ein Verfahren und eine Vorrichtung zur Verfügung zu stellen, um eine maximale Ausnutzung der Verschleißauskleidung gezielt zu erfassen.

Die Aufgabe wird durch ein Verfahren und eine Vorrichtung zur Verschleißüberwachung von Industrieanlagen, vorzugsweise metallurgische Industrieanlagen gelöst. Die Industrieanlage weist zumindest ein Flächenelement (11) mit einer Verschleißdicke (d) auf. An der Montageseite (11a) des Flächenelementes (11) ist zumindest ein elektrischer Leiter (4) angebracht, bevorzugt ist der Leiter (4) mäanderförmig im Verschleißbereich (A) angebracht. Ein Leiteranfang (5) und ein Leiterende (6) sind jeweils mit einem Auswertesystem (1) verbunden, wobei das Auswertesystem (1) einen aufgetretenen Verschleiß (11c) des Flächenelements (11), aufgrund einer Änderung des elektrischen Stromflusses im Leiter (4), und/oder einer Änderung des elektrischen Widerstandes des Leiters (4), detektiert.

## Beschreibung

### Gebiet der Technik

Die vorliegende Erfindung betrifft das Gebiet von Industrieanlagen, konkret solche Industrieanalgen welche Verschleißelemente aufweisen und nach gewissen Zeitabständen gewechselt werden müssen.

Einerseits betrifft die Erfindung ein Verfahren und eine Vorrichtung zur Verschleißüberwachung von Industrieanlagen, vorzugsweise metallurgische Industrieanlagen. Die Industrieanlage hat zumindest ein Flächenelement mit einer Verschleißdicke, wobei das Flächenelement eine Verschleißseite und eine Montageseite aufweist. Das Flächenelement umfasst einen Verschleißbereich, welcher während einer Betriebsdauer der Industrieanlage einem Verschleiß ausgesetzt ist.

Andererseits betrifft die Erfindung ein Computerprogramm und eine Computerlesbares Medium.

### Stand der Technik

In Industrieanlagen, wie zum Beispiel einem Stahlwerk oder Hochofen, werden verschiedene Materialien - wie Rohmaterialien und/oder Zusatzstoffe - für die Produktion benötigt. Diese Materialien werden meist in stückiger Form transportfähig angeliefert. Die Form kann je nach Bedarf und Transportfähigkeit variieren - beispielsweise in Form von kleinen Stücken/Brocken oder in Form von Spänen.
Diese Materialien werden dann im Werk sortenrein vorzugsweise von einem LKW oder per Förderband von einer Rohmaterialhalde zu den entsprechenden Vorratsbunkern transportiert. Wird ein Material in einem Produktionsschritt benötigt, wird es aus dem Bunker entnommen.

Durch den Transport der Materialien werden bestimmte Stellen sehr stark beansprucht. Vor allem das Aufprallen des Materials auf Bunkerwände bzw. auf Übergabeschurren bei Förderbändern verursacht einen erheblichen Verschleiß. Bei extrem belasteten Stellen kann es durch den fortschreitenden Verschleiß zum Durchbruch, also zum endgültigen Verschleiß der Bunkerwände oder Aufprallbleche kommen. Um einen Durchbruch so lange wie möglich hinauszuzögern und um die Anlagen vor Schaden zu schützen, werden diese Stellen zusätzlich mit Verschleißblechen ausgekleidet. In der Stahlproduktion kommt es vor allem bei Legierungsstoffen zu einem schnellen Abrieb der Auskleidung.
Je nachdem welche Materialien transportiert werden bzw. wie diese aufprallen, kommen verschiedene Stoffe als Verschleißauskleidung in Frage. Hartgummimatten und abriebfeste Stähle wie beispielsweise Hardox werden häufig eingesetzt. Diese Stoffe zeichnen sich durch die ideale Kombination aus Zähigkeit und Härte aus.
Obwohl ein Durchbruch durch diese speziellen Stoffe verzögert wird, kommt es trotzdem früher oder später zu einem Verschleiß der Bunkerwände. Das Wartungspersonal muss über den Zeitpunkt des Austausches der Verschleißauskleidung bzw. stark beanspruchter Teile entscheiden und muss folgende Aspekte abwägen.
Die Verschleißauskleidung sollte so lange wie möglich verwendet werden können. Weiters soll die gesamte Dicke ausgenutzt werden, um einen Austausch möglichst lange hinauszuzögern, und dadurch die größtmögliche Kostenersparnis zu generieren.
Andererseits folgen bei einem unerkannten Durchbruch intensive Reinigungsarbeiten durch Materialverluste. Es kann zu einem Stopp des Materialtransports kommen, was sich auf die weitere Produktion auswirken kann. Zusätzlich folgen aufwendige Instandhaltungsmaßnahmen, um Bunkerwände wieder zu reparieren.
Das Instandhaltungspersonal hat somit immer einen Kompromiss zu treffen zwischen der Vermeidung von Durchbrüchen und einer maximalen Ausnutzung der Verschleißauskleidung.

### Zusammenfassung der Erfindung

Die Aufgabe der Erfindung ist es ein Verfahren und eine Vorrichtung zur Verfügung zu stellen, um eine maximale Ausnutzung der Verschleißauskleidung gezielt zu erfassen.

Die Aufgabe wird mit dem eingangs genannten Verfahren gelöst. An der Montageseite des Flächenelementes ist zumindest ein elektrischer Leiter angebracht, bevorzugt ist der Leiter mäanderförmig im Verschleißbereich angebracht. Dies gewährleistet, dass der Verschleiß besonders schnell erkannt wird. Es sind auch bevorzugt zumindest 2, besonders bevorzugt zumindest 4 elektrische Leiter denkbar.
Ein Leiteranfang und ein Leiterende sind jeweils mit einem Auswertesystem verbunden. Das Auswertesystem detektiert einen aufgetretenen Verschleiß des Flächenelements. Das Flächenelement dient beispielsweise als Verschleißauskleidung in einem Bunker oder einem metallurgischen Gefäß. Das Flächenelement weißt eine Verschleißseite, welche mit gefördertem Material oder flüssigem Material in direkten Kontakt ist, auf. Die flüssigen Materialien sind insbesondere Metallschmelzen oder abrasive Flüssigkeiten. Die geförderten Materialien liegen meist in stückiger Form vor.
Die Montageseite dient der Anbringung des Flächenelements an der Industrieanlage, beispielsweise an einer Bunkerwand oder an der Wand des metallurgischen Gefäßes. Die Montageseite, kann aber auch auf ein zusätzlches Flächenelement angebracht werden. Dies ist dann der Fall, wenn mehrere Flächenelemente zum Einsatz kommen - wenn das Flächenelement mehrschichtig aufgebaut ist. An der Montageseite wird der oder die elektrischen Leiter angeordnet. Der elektrische Leiter besteht aus elektrisch leitendem Material, wie beispielsweise Kupfer, Aluminium, oder Stahl. Der Leiter wird derart an dem Flächenelement verlegt, dass der Leiteranfang und das Leiterende elektrisch mit einem Auswertesystem verbunden werden kann. Wenn die Verschleißdicke an zumindest einer Stelle des Flächenelementes aufgebraucht ist - also ein Verschleiß auftritt - wird der Leiter beschädigt oder durchtrennt und das Auswertesystem detektiert eine Änderung des elektrischen Stromflusses durch den elektrischen Leiter und/oder eine Änderung des elektrischen Widerstandes des Leiters.
Dies kann beispielsweise dadurch erfolgen, dass eine konstante Spannung an den Leiteranfang und das Leiterende angebracht wird. Durch den Gesamtwiderstand des Leiters resultiert ein entsprechender Strom. Wenn der Leiter durchtrennt wird steigt der Gesamtwiderstand, wodurch der Strom reduziert wird. Im Fall, dass der gemessene Strom eine gewisse Schranke überschreitet, kann auf einen Durchbruch des Flächenelements rückgeschlossen werden. Wenn der Leiter komplett durchtrennt wird ist der Stromfluss unterbrochen und der Strom sinkt gegen Null und der Widerstand steigt gegen unendlich.

Eine vorteilhaftes Ausführungsform sieht vor, dass das Auswertesystem lösbar mit dem Leiteranfang und dem Leiterende verbunden ist. Diese Ausführung kommt beispielsweise zum Einsatz, wenn durch das Wartungspersonal während einem Rundgang in der Industrieanlage verschiedenste Flächenelemente überprüft werden sollen. Durch die steckbare Ausführung kann das Auswertesystem bei einem Defekt auch leicht getauscht werden oder beim Wechsel des Flächenelements wieder rasch angeschlossen werden. In diesem Fall geht das Instandhaltungspersonal mit einem tragbaren Auswertesystem von Flächenelement zu Flächenelement bzw. zu den Orten, an denen die jeweiligen Leiteranfänge und Leiterende zugänglich sind. Das Auswertesystem wird mit dem Leiteranfang und dem Leiterende verbunden um einen möglichen Verschleiß zu detektieren.

In einer bevorzugten Ausführungsform ist das Auswertesystem hochohmig ausgeführt, damit keine hohen Wirbelströme induziert werden können. In Zusammenhang mit dieser Erfindung wird unter hochohmig ein Innenwiderstand des Auswertesystems von über 10.000 Ohm verstanden. Die Wirbelströme können beispielsweise in der Nähe von Elektrolichtbogenöfen oder Induktionsöfen auftreten. In einem solchen Fall könnte bei einem niederohmigen Anschluss der Leiter aufgrund der hohen Wirbelströme zerstört werden oder es ist während dem Betrieb dieser Öfen - im Bereich der Öfen - nicht möglich den Verschleiß zu überwachen.

In einer besonders bevorzugten Ausführung besteht das Auswertesystem aus einem mit dem Leiteranfang und dem Leiterende verbundenen RFID Transponder und einem RFID Lesegerät zur Datenübertragung. Der RFID Transponder ist bevorzugt ein passiver RFID Transponder mit zusätzlichen Eingängen, an welche der Leiteranfang und das Leiterende angeschlossen werden können - es lassen sich also Eingänge durch den RFID Transponder überwachen. Der Leiteranfang und das Leiterende sind mit speziellen Eingängen des RFID Transponders verbunden, der zur Überwachung des Leiters herangezogen werden kann - beispielsweise Leiterbruch, Widerstand oder Kurzschluss. In diesem Fall kann neben der Identifikation des RFID Transponders auch ein Leiterbruch oder eine Beschädigung detektiert werden. Damit kann auf einen Durchbruch des Flächenelements geschlossen werden. Das Instandhaltungspersonal kann mit dem RFID Lesegerät Informationen der jeweiligen RFID Transponder auslesen. Die ausgelesene Information wird entweder vom RFID Lesegerät gespeichert, vom Wartungspersonal abgelesen oder über eine Schnittstelle, bevorzugt durch eine drahtlose Verbindung, an ein übergeordnetes Automatisierungssystem übermittelt. Dieses Automatisierungssystem kann auch so ausgestaltet sein, dass dem Wartungspersonal die Zeitpunkte vorgegeben werden, zu welchem Zeitpunkt der jeweilige RFID Transponder ausgelesen werden soll. Durch eine eindeutige Identifizierungsnummer kann für jeden RFID Transponder der Ort und das jeweilige Bauteil immer genau ermittelt werden. Die Daten sind in einer Datenbank abgelegt, auf welche unter anderem das Automatisierungssystem zugreifen kann.

Das Automatisierungssystem kann unter Berücksichtigung zusätzlicher Parameter - welche ebenfalls in einer Datenbank abgelegt sind - wie:
- Material
- Abrasivitätswert für das Material
- Menge/Gewicht des Materials
- Standzeiten
- Fördergeschwindigkeit
- Aufbau des Flächenelements
- Material des Flächenelements
- Anzahl der Leiter
selbstlernend die Zeitpunkte berechnen. Während des Betriebes kann die Berechnung an die Rahmenbedingungen angepasst werden. Selbstlernend kann der Abrasivitätswert für verschiedene Materialien auch entsprechend den Erfahrungen angepasst werden. Solche Erfahrungen können beispielsweise auch Messungen der Verschleißdicke sein. Diese Messungen kann das Wartungspersonal bei ihren Rundgängen durchführen und die Information an das Automatisierungssystem übermitteln. Zusätzlich können Daten aus anderen Industrieanlagen zur Optimierung des Systems herangezogen werden. Durch diese Informationen kann das Automatisierungssystem die Zeitpunkte für das Auslesen vorgeben. Eine vorteilhafte Ausführung sieht vor, dass mehrere Leiter, vorzugsweise zumindest mit einem RFID Transponder verbunden sind und diese von einem RFID Lesegerät jeweils über eine RFID Antenne ausgelesen werden. Durch diese Anordnung ist es nicht notwendig den RFID Transponder an einen für das Instandhaltungspersonal zugänglichen Bereich anzubringen. Des Weiteren ist auch denkbar, dass durch die Verwendung einer Antenne mehrere RFID Transponder ausgelesen werden können. Wenn also beispielsweise mehrere Leiter verlegt sind, welche jeweils mit einem eigenen RFID Transponder verbunden sind können diese durch eine Antenne ausgelesen werden. Wenn eine Kabelantenne verwendet wird, dann ist es auch möglich RFID Transponder, welche örtlich einen größeren Abstand aufweisen, durch diese Kabelantenne auszulesen. Das Automatisierungssystem wird kontinuierlich auf dem aktuellen Stand gehalten. Das Einplanen von Rundgängen des Instandhaltungspersonal ist in diesem Fall nicht mehr notwendig.

Eine bevorzugte Ausführungsform sieht vor, dass der Leiter auf einer Folie, bevorzugt einer selbstklebenden Folie, angebracht ist. Der Leiter ist in der gewünschten Form - also nach einem vorgegebenen Verschleißmuster des Flächenelementes - auf der Folie angeordnet und kann auf das Flächenelement aufgeklebt werden. Dies ermöglicht eine schnelle Montage des elektrischen Leiters auf dem Flächenelement.

Eine besonders vorteilhafte Ausführungsform sieht vor, dass das Flächenelement aus zumindest zwei Schichten besteht. Diese weisen jeweils eine Verschleißdicke auf und an jeder Schicht ist jeweils ein elektrischer Leiter an der Montageseite angebracht. Durch diese Ausführung kann bei Verschleiß der ersten Schicht bereits eine Warnung ausgegeben werden, dass die Verschleißdicke in absehbarer Zeit verbraucht ist. In dieser absehbaren Zeit können bereits Wartungsmaßnahmen veranlasst werden.

Die Aufgabe wird auch durch eine Vorrichtung eingangs genannter Art gelöst. Die Vorrichtung zur Verschleißüberwachung weist an der Montageseite des Flächenelementes zumindest einen elektrischen Leiter auf. Dieser Leiter ist bevorzugt mäanderförmig im Verschleißbereich angebracht, wobei ein Leiteranfang und ein Leiterende mit einem Auswertesystem verbunden ist. Das Auswertesystem erkennt einen aufgetretenen Verschleiß des Flächenelements, aufgrund einer Änderung des elektrischen Stromflusses im elektrischen Leiter und/oder einer Änderung des elektrischen Widerstandes des Leiters.
Es ergeben sich dieselben Vorteile, die bereits beim Verfahren dargelegt wurden.

Eine bevorzugte Ausführungsform sieht vor, dass das Auswertesystem lösbar mit dem Leiteranfang und dem Leiterende verbunden ist.

Eine vorteilhafte Ausführung sieht vor, dass das Auswertesystem hochohmig, bevorzugt mit einem Innenwiderstand von größer als 10000 Ohm, ausgeführt ist.

Eine weitere zweckmäßige Ausführungsform sieht vor, dass das Auswertesystem aus einem mit dem Leiteranfang und dem Leiterende verbundenen RFID Transponder und einem RFID Lesegerät besteht.
In einer bevorzugten Ausführung sind mehrere Leiter, vorzugsweise zumindest zwei Leiter, jeweils mit einem eigenen RFID Transponder verbunden, wobei besonders bevorzugt die RFID Transponder von einem RFID Lesegerät mithilfe einer RFID Antenne ausgelesen werden.

Eine bevorzugte Ausführungsform sieht vor, dass der Leiter auf einer Folie, bevorzugt einer selbstklebenden Folie, angebracht ist.

Eine besonders vorteilhafte Ausführungsform sieht vor, dass das Flächenelement aus zumindest zwei Schichten besteht. Diese weisen jeweils eine Verschleißdicke auf und an jeder Schicht ist jeweils ein elektrischer Leiter an der Montageseite angebracht.

Es wird bezüglich der Vorteile und der Erläuterung zur Vorrichtung und den vorteilhaften Ausführungsvarianten auf die Ausführungen zum Verfahren verwiesen.

Eine bevorzugte Ausführungsform sieht vor, dass die Industrieanlage mehrere Flächenelemente, an welchen jeweils an der Montageseite einen Leiter angebracht ist, aufweist. Die Leiter der einzelnen Flächenelemente können zu einer größeren Einheit verbunden werden. Die Verbindung der einzelnen Leiter kann in Serie oder Parallel erfolgen. Bei in Serie geschalteten Flächenelementen kann man einen Durchbruch innerhalb der größeren Einheit durch einen Leitungsbruch eines Flächenelements erkennen. Sind die Leiter parallel miteinander verbunden, so erhöht sich bei einem Durchbruch eines Flächenelements und somit der Beschädigung eines Leiters der Widerstand und somit wird der Strom reduziert. Wird ein gewisser Grenzwert bei der Messung des Stroms unterschritten oder bei der Messung des Widerstandes überschritten, so kann man auf einen Durchbruch schließen.

Die Aufgabe wird des Weiteren durch ein Computerprogramm umfassend Befehle, die bewirken, dass die oben beschriebene Vorrichtung zur Verschleißüberwachung die oben angeführten Verfahrensschritte ausführt.

Ein Speichermedium auf welchem das Computerprogramm ausgeführt löst ebenfalls die obige Aufgabe.

### Kurze Beschreibung der Zeichnungen

Fig. 1 eine schematische Vorrichtung zur Verschleißerkennung einer Industrieanlage.
Fig. 2 zeigt ein Flächenelement mit einem Leiter.
Fig. 3 zeigt eine weitere Ausführungsform einer Vorrichtung zur Verschleißerkennung einer Industrieanlage.
Fig. 4 zeigt eine Vorrichtung zur Verschleißerkennung mit einem zweischichtigen Flächenelement.

### Beschreibung der Ausführungsformen

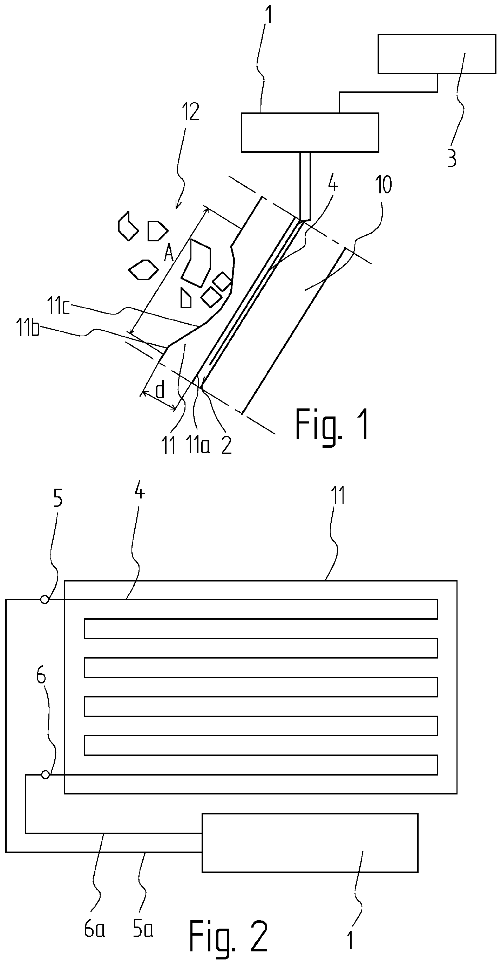

In Fig. 1 ist schematisch eine Vorrichtung zur Verschleißerkennung einer Industrieanlage dargestellt. Das Auswertesystem 1 ist mit dem Leiter 4 verbunden. Das Auswertesystem 1 übermittelt die Daten an ein übergeordnetes Leitsystem 3 oder einen Speicher. Der Leiter 4 ist in dieser Ausführungsvariante auf einer Folie 2 aufgebracht, wobei die Folie 2 bevorzugt eine selbstklebende Folie 2 ist. Die Folie 2 befindet sich zwischen einer Wand 10, bevorzugt eine Bunkerwand, und einer Verschleißschicht 11. Das Flächenelement 11 hat eine Montageseite 11a und eine Verschleißseite 11b. Auf der Verschleißseite 11b trifft beispielsweise stückiges Material 12 auf, welches einen Verschleiß 11c verursacht. Das Flächenelement 11 weist eine Verschleißdicke d auf, sobald die Verschleißdicke d an einer Stelle aufgebraucht ist wird der Leiter 4 in der Nähe dieser Stelle beschädigt oder durchtrennt. Es ist auch in manchen Fällen denkbar, dass nicht das ganze Flächenelement vom Verschleiß betroffen ist, sondern nur eine bestimmter Verschleißbereich A, welcher durch eine Fläche oder mehrere Flächen festgelegt sein kann. Der Leiter 4 ist an der Montageseite 11a angebracht. Es ist wichtig, dass der Leiter 4 keinen elektrischen Kontakt zur Verschleißschicht 11 und der Wand 10 aufweist. Das Auswertesystem 1 überprüft beispielsweise anhand einer angelegten Spannung ob sich ein gemessener Strom und/oder ein gemessener Widerstand des Leiters 4 verändert. Sobald der Leiter 4 beschädigt oder durchtrennt wird ist eine Änderung des gemessenen Stromes oder des ermittelten Widerstandes erkennbar.
Wenn dies der Fall ist, dann übermittelt das Auswertesystem 1 dem übergeordneten Leitsystem 3 ein entsprechendes Signal. Das Auswertesystem 1 kann aber auch ein Handgerät sein mit einem Speicher. Der Speicher kann nach einem Rundgang des Instandhaltungspersonals ausgelesen und ausgewertet werden und aufgrund dessen werden entsprechende Maßnahmen veranlasst.

In der Fig. 2 ist das Flächenelement 11 mit einem mäanderförmig angebrachten Leiter 4 dargestellt. Der Leiter 4 weist einen Leiteranfang 5 und ein Leiterende 6 auf, wobei der Leiteranfang 5 und das Leiterende 6 an eine Stelle geführt werden, an welcher das Auswertesystem angeschlossen werden kann. Diese werden über ein erstes Kabel 5a und ein zweites Kabel 6a mit dem Auswertesystem 1 verbunden.

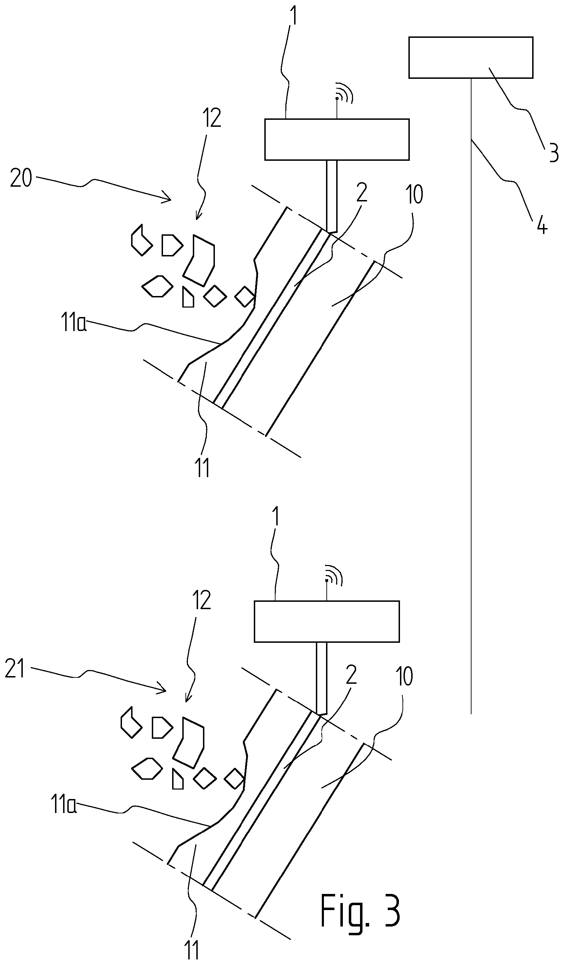

In Fig. 3 sind schematisch eine erste Vorrichtung 20 einer Industrieanlage und eine zweites Vorrichtung 21 einer Industrieanlage mit jeweils einem Flächenelement 11 dargestellt. Die Flächenelemente 11 weisen jeweils einen Leiter 4 auf, wobei diese jeweils mit einem RFID Transponder 7 verbunden sind. Ein RFID Lesegerät 9 liest über eine Antenne 8 die RFID Transponder 7 aus. Der RFID Transponder 7 ist derart ausgestaltet, dass dieser beim Durchtrennen des Leiters 4 ein geändertes Signal übermittelt. Das RFID Lesegerät 9 detektiert über die Antenne 8 dieses geänderte Signal und übermittelt eine entsprechende Meldung, Alarm oder ein Signal an ein übergeordnetes Leitsystem 3.

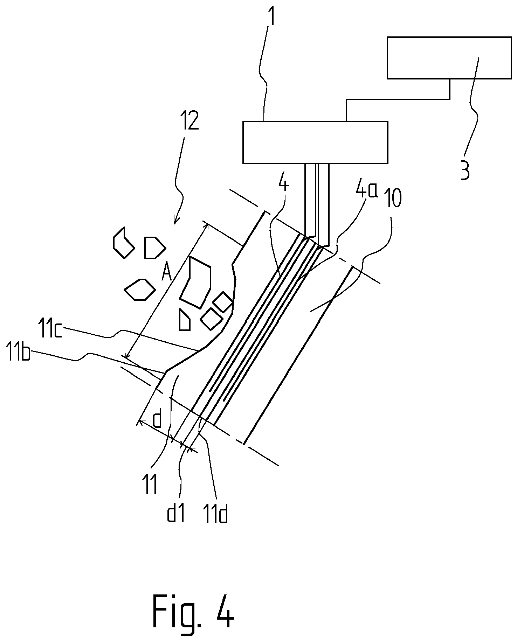

In Fig. 4 ist ein zweischichtiges Flächenelement mit einem Flächenelement 11 gezeigt, welches den Leiter 4 aufweist und bei Beschädigung dieses Leiters eine Warnung ausgegeben wird. Ein Restflächenelement 11d steht aber weiter zur Verfügung. Wenn das Restflächenelement 11d mit einer Verschleißdicke d1 ebenfalls verschleißt ist, dann wird ein zweiter Leiter 4a beschädigt und eine zweite Warnung oder ein Alarm wird vom Auswertesystem 1 ausgegeben oder ein entsprechendes Signal wird an ein übergeordnetes Leitsystem 3 übergeben. Durch eine derartige Ausführung kann das Instandhaltungspersonal die Wartungsarbeiten im Vorhinein besser planen. Es ist natürlich auch denkbar, dass das Flächenelement 11 aus drei, vier oder mehr unterschiedlichen Schichten besteht.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Auswertesystem
- 2: Folie
- 3: Leitsystem
- 4: Leiter
- 4a: Zweiter Leiter
- 5: Leiteranfang
- 5a: erstes Kabel
- 6: Leiterende
- 6a: zweites Kabel
- 7: RFID Transponder
- 8: Antenne
- 9: RFID Lesegerät
- 10: Wand
- 11: Flächenelement
- 11a: Montageseite
- 11b: Verschleißseite
- 11c: Verschleiß
- 11d: Restflächenelement
- 12: Stückiges Material
- 20: Erste Vorrichtung
- 21: Zweite Vorrichtung
- d, d1: Verschleißdicke
- A: Verschleißbereich

## Patentansprüche

1. Verfahren zur Verschleißüberwachung von Industrieanlagen, vorzugsweise metallurgische Industrieanlagen, wobei die Industrieanlage zumindest ein Flächenelement (11) mit einer Verschleißdicke (d) aufweist, wobei das Flächenelement (11) eine Verschleißseite (11b) und eine Montageseite (11a) aufweist, wobei das Flächenelement (11) einen Verschleißbereich, welcher, während einer Betriebsdauer der Industrieanlage, einem Verschleiß (11c) ausgesetzt ist, aufweist, **dadurch gekennzeichnet, dass** an der Montageseite (11a) des Flächenelementes (11) zumindest ein Leiter (4) angebracht ist, bevorzugt ist der Leiter (4) mäanderförmig im Verschleißbereich (A) angebracht, wobei ein Leiteranfang (5) und ein Leiterende (6) jeweils mit einem Auswertesystem (1) verbunden sind und das Auswertesystem (1) einen aufgetretenen Verschleiß (11c) des Flächenelements (11), aufgrund einer Änderung des elektrischen Stromflusses im Leiter (4), bevorzugt durch einen abnehmenden Stromfluss und/oder einer Änderung des elektrischen Widerstandes des Leiters (4), bevorzugt durch einen zunehmenden Widerstandswert, detektiert.

2. Verfahren zur Verschleißüberwachung von Industrieanlagen nach Anspruch 1, **dadurch gekennzeichnet, dass** das Auswertesystem (1) lösbar mit dem Leiteranfang (5) und dem Leiterende (6) verbunden ist.

3. Verfahren zur Verschleißüberwachung von Industrieanlagen nach Anspruch 1, **dadurch gekennzeichnet, dass** das Auswertesystem (1) hochohmig, bevorzugt mit einem Innenwiderstand von größer als 10000 Ohm, ausgeführt ist.

4. Verfahren zur Verschleißüberwachung von Industrieanlagen nach Anspruch 1, **dadurch gekennzeichnet, dass** das Auswertesystem (1) einen mit dem Leiteranfang (5) und dem Leiterende (6) verbundenen RFID Transponder (7), bevorzugt ein passiver RFID Transponder (7), und ein RFID Lesegerät (9) umfasst, bevorzugt sind mehrere Leiter (4), vorzugsweise zumindest zwei Leiter (4, 4a), jeweils mit einem eigenen RFID Transponder (7) verbunden, wobei bevorzugt die RFID Transponder (7) vom RFID Lesegerät (9) mithilfe einer RFID Antenne (8) ausgelesen werden.

5. Verfahren zur Verschleißüberwachung von Industrieanlagen nach Anspruch 1, **dadurch gekennzeichnet, dass** der Leiter (4) auf einer Folie (2), bevorzugt eine selbstklebende Folie (2), angebracht ist.

6. Verfahren zur Verschleißüberwachung von Industrieanlagen nach Anspruch 1, **dadurch gekennzeichnet, dass** das Flächenelement (11) aus zumindest zwei Schichten besteht, welche jeweils eine Verschleißdicke (d, d1) aufweisen und an jeder Schicht jeweils ein Leiter (4) an der Montageseite (11a) angebracht ist.

7. Vorrichtung zur Verschleißüberwachung von Industrieanlagen, vorzugsweise metallurgische Industrieanlagen, wobei die Industrieanlage zumindest ein Flächenelement (11) mit einer Verschleißdicke (d) aufweist, wobei das Flächenelement (11) eine Verschleißseite (11b) und eine Montageseite (11a) aufweist, das Flächenelement (11), mit einen Verschleißbereich (A), ist während einer Betriebsdauer der Industrieanlage einem Verschleiß (11c) ausgesetzt, **dadurch gekennzeichnet, dass** an der Montageseite (11a) des Flächenelementes (11) zumindest ein elektrischer Leiter (4) angebracht ist, bevorzugt ist der Leiter (4) mäanderförmig im Verschleißbereich (A) angebracht, wobei ein Leiteranfang (5) und ein Leiterende (6) mit einem Auswertesystem (1) verbunden ist, wobei das Auswertesystem (1) einen aufgetretenen Verschleiß (11c) des Flächenelements (11), aufgrund einer Änderung des elektrischen Stromflusses im Leiter (4) und/oder einer Änderung des elektrischen Widerstandes des Leiters (4), detektiert.

8. Vorrichtung zur Verschleißüberwachung von Industrieanlagen nach Anspruch 7, **dadurch gekennzeichnet, dass** das Auswertesystem (11) lösbar mit dem Leiteranfang (5) und dem Leiterende (6) verbunden ist.

9. Vorrichtung zur Verschleißüberwachung von Industrieanlagen nach Anspruch 7 oder 8, **dadurch gekennzeichnet, dass** das Auswertesystem (1) hochohmig, bevorzugt mit einem Innenwiderstand von größer als 10000 Ohm, ausgeführt ist.

10. Vorrichtung zur Verschleißüberwachung von Industrieanlagen nach Anspruch 7 - 9 , **dadurch gekennzeichnet, dass** das Auswertesystem (1) einen mit dem Leiteranfang (5) und dem Leiterende (6) verbundenen RFID Transponder (7) und ein RFID Lesegerät (9) umfasst, bevorzugt sind mehrere Leiter (4, 4a), vorzugsweise zumindest zwei Leiter (4), jeweils mit einem eigenen RFID Transponder (7) verbunden, wobei die RFID Transponder (7) besonders bevorzugt von einem RFID Lesegerät (9) mithilfe einer RFID Antenne (8) ausgelesen werden.

11. Vorrichtung zur Verschleißüberwachung von Industrieanlagen nach Anspruch 7 - 10, **dadurch gekennzeichnet, dass** der Leiter (4) auf einer Folie (2), bevorzugt eine selbstklebende Folie (2), angebracht ist.

12. Vorrichtung zur Verschleißüberwachung von Industrieanlagen nach Anspruch 7 - 11, **dadurch gekennzeichnet, dass** das Flächenelement (11) aus zumindest zwei Schichten besteht, welche jeweils eine Verschleißdicke (d, d1) aufweisen und an jeder Schicht jeweils ein Leiter (4) an der Montageseite (11a) angebracht ist.

13. Vorrichtung zur Verschleißüberwachung von Industrieanlagen nach Anspruch 7 - 12, **dadurch gekennzeichnet, dass** die Industrieanlage mehrere Flächenelemente (11), welche jeweils an der Montageseite (11a) einen Leiter (4) aufweisen, umfasst, wobei die Leiter (4) der einzelnen Flächenelemente (11) parallel oder in Serie miteinander verbunden sind.

14. Computerprogramm umfassend Befehle, die bewirken, dass die Vorrichtung zur Verschleißüberwachung nach Anspruch 7 bis 12 die Verfahrensschritte nach Anspruch 1 bis 6 ausführt.

15. Computerlesbares Medium, auf dem das Computerprogram nach Anspruch 13 gespeichert ist.
